(19) Europäisches Patentamt
European Patent Office
Office européen des brevets

(11) Numéro de publication : 0 403 400 B1

(12) # FASCICULE DE BREVET EUROPEEN

(45) Date de publication du fascicule du brevet : **04.08.93 Bulletin 93/31**

(51) Int. Cl.$^5$ : **C08J 3/03,** C08L 83/04, A61K 9/32

(21) Numéro de dépôt : **90420237.1**

(22) Date de dépôt : **17.05.90**

(54) **Dispersion aqueuse à base d'huiles silicones fonctionnalisées pouvant réticuler en un élastomère par élimination de l'eau.**

(30) Priorité : **31.05.89 FR 8907417**

(43) Date de publication de la demande : **19.12.90 Bulletin 90/51**

(45) Mention de la délivrance du brevet : **04.08.93 Bulletin 93/31**

(84) Etats contractants désignés : **AT BE CH DE DK ES FR GB GR IT LI LU NL SE**

(56) Documents cités :
**EP-A- 0 169 098**
**EP-A- 0 202 679**
**EP-A- 0 266 729**
**EP-A- 0 277 740**

(73) Titulaire : **RHONE-POULENC CHIMIE**
**25, quai Paul Doumer**
**F-92408 Courbevoie Cédex (FR)**

(72) Inventeur : **Cerles, Bernard**
**1, rue des Monnaies**
**F-79500 Melle (FR)**
Inventeur : **Feder, Michel**
**35, rue du Séminaire**
**Zillisheim, F-68720 Illfurth (FR)**

(74) Mandataire : **Fabre, Madeleine-France et al**
**RHONE-POULENC CHIMIE Direction des Brevets Secteur Spécialités Chimiques 25, quai Paul-Doumer**
**F-92408 Courbevoie Cédex (FR)**

**EP 0 403 400 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une dispersion aqueuse à base d'huiles silicones fonctionnalisées pouvant réticuler en un élastomère par élimination de l'eau.

Il existe de nombreux documents brevets décrivant des dispersions aqueuses du type ci-dessus dans lesquelles l'huile silicone de base à extrémités silanol est préparée par polymérisation en émulsion.

Le brevet US-A-2 891 920 décrit un procédé de polymérisation en émulsion de polydiorganosiloxane en utilisant un catalyseur acide ou basique en présence d'agents tensio-actifs anioniques, cationiques ou non-ioniques. Ce brevet enseigne que les émulsions obtenues sont stables au stockage et sont utiles, après addition de charges, pour faire des peintures donnant un revêtement continu par élimination de l'eau.

Le brevet US-A-3 294 725 décrit en particulier l'utilisation d'acide dodécylbenzène-sulfonique pour polymériser en émulsion des polydiorganosiloxanes. Ce brevet enseigne que pour obtenir des émulsions stables, il est souhaitable de règler le pH de ces émulsions à une valeur de 7 environ. Ce brevet enseigne que l'on peut obtenir à partir de ces émulsions neutralisées, auxquelles on a ajouté de la silice colloïdale et un polyalcoxysilane, un revêtement élastomère.

L'enseignement du brevet US-A-3 360 491 est similaire à celui de US-A-3 294 725, sauf que l'acide dodécylbenzène sulfonique est remplacé par l'hydrogénolaurylsulfate.

Le brevet US-A-3 355 406 décrit entre autre un latex de silicone exempt de charge minérale comportant :

- une suspension aqueuse colloïdale d'un $\alpha,\omega$-(dihydroxy)polydiorganosiloxane,
- une résine silsesquioxane sous forme d'une suspension colloïdale,
- un catalyseur choisi parmi des acides minéraux, des bases fortes, des diacylates de dialkylétain et des péroxydes organiques ou inorganiques.

Le brevet US-A-3 697 469 décrit un procédé particulier de polymérisation en émulsion de polydiorganosiloxanes et indique la possibilité d'ajouter à cette émulsion de la silice colloïdale et un sel d'étain en vue d'obtenir un revêtement élastomère par évaporation d'eau.

Le brevet français FR-A-2 110 358 décrit une émulsion silicone à pH compris entre 6,5 et 9, réticulant en un élastomère conducteur de l'électricité après évaporation de l'eau par incorporation de noir de carbone. L'émulsion, comportant en outre un sel d'étain et un polyalcoxysilane, n'est pas stable au stockage et doit être conservée en deux emballages distincts (émulsion bicomposante).

Les brevets américains US-A-4 221 688, US-A-4 244 849 et français FR-A-2 463 163 décrivent des émulsions silicone stables au stockage et comportant :

- une émulsion d'un polymère $\alpha,\omega$-(dihydroxy)polydiorganosiloxane stabilisée anioniquement,
- une charge siliceuse,
- un sel d'étain,
- éventuellement une charge non renforçante.

La charge siliceuse peut être une silice colloïdale (US-A-4 221 688), du silicate de soude (US-A-4 244 849), ou une silice amorphe en poudre (FR-A-2 463 163).

US-A-4 618 645 décrit la préparation d'un latex aqueux de polyorganosiloxane réticulé par mélange d'un polydiorganosiloxane à extrémités silanol, d'un polyalcoxysilane et un tensio-actif anionique du type sulfate ou sulfonate alcalin. La résine ou l'huile silicone fonctionnalisée est ensuite nécessairement polymérisée (en fait polycondensée) par catalyse anionique jusqu'à l'obtention de la masse moléculaire visée en présence d'acide sulfonique ou d'hydrogénosulfate (d'après les exemples pendant 5 heures, à température ambiante et à pH inférieur à 5), puis neutralisé à pH supérieur à 7.

Les brevet US-A-4 608 412 et US-A-4 618 642 enseignent l'addition de polyalcoxysilanes à des dispersions aqueuses d'huiles organopolysiloxanes à extrémités silanol.

A la connaissance de la Demanderesse, les dispersions aqueuses de silicone pouvant réticuler en élastomère par élimination de l'eau présentent toujours comme huile silicone de base à extrémités silanol, une huile polymérisée en émulsion en présence d'un catalyseur anionique jouant également, de préférence, le rôle de tensio-actif.

Cependant ces dispersions aqueuses présentent un problème de stabilité au stockage difficile à résoudre, les solutions techniques les plus connues impliquant une conservation des dispersions à un pH élevé qui peut être incompatible avec certaines applications.

La solution à ce problème, proposée par la présente invention est de remplacer, dans les dispersions aqueuses du type ci-dessus, l'huile silicone de base à extrémités silanol et polymérisée en émulsion par une émulsion d'huile silicone déjà polymérisée et fonctionnalisée alcoxy. Il a été trouvé que les dispersions aqueuses ainsi modifiées sont stables au stockage, cette stabilité n'étant pas liée au pH. Par ailleurs le pH des dispersions aqueuses selon l'invention peut être indifféremment acide, neutre ou basique suivant la nature de la charge et des tensio-actifs utilisés.

En outre les élastomères issus des dispersions aqueuses après élimination de l'eau présentent des propriétés mécaniques du même niveau, sinon meilleures que celles isssues des dispersions aqueuses décrites dans les brevets précités.

Plus précisément la présente invention concerne une dispersion aqueuse de silicone, réticulant en un élastomère par élimination de l'eau dans les conditions ambiantes, caractérisée en ce qu'elle comporte :

(A) - 100 parties en poids d'une émulsion du type huile dans eau stabilisée par au moins un agent tensioactif choisi parmi les agents tensio-actifs anioniques et non-ioniques et leurs mélanges, d'au moins un diorganopolysiloxane de formule :

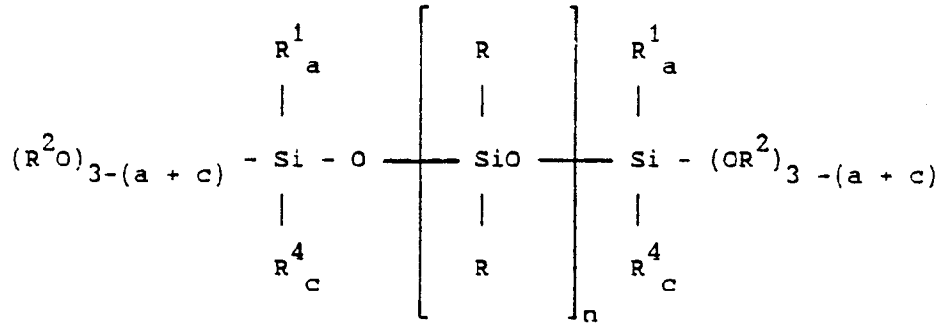

(1)

- où a est 0 ou 1,
- où c est 0 ou 1,
- où a + c = 0 ou 1,
- où $R^1$ représente un radical monovalent hydrocarboné saturé ou non en $C_1$ à $C_{13}$, substitué ou non substitué, aliphatique, cyclique ou aromatique, pouvant comporter une fonction époxy ou une fonction amine primaire, secondaire ou tertiaire,
- où $R^2$ identique ou différent représente un radical organique aliphatique ayant de 1 à 8 atomes de carbone choisi notamment entre les radicaux alkyle, les radicaux alkyléther, les radicaux alkylester, les radicaux alkylcétone, les radicaux alkylcyano et les radicaux aralkyle ayant de 7 à 13 atomes de carbone.
- où $R^4$ représente un radical monovalent hydrocarboné saturé ou non en $C_1$ à $C_{13}$ substitué ou non, aliphatique, cyclanique ou aromatique, $R^4$ pouvant être identique à $R^1$,
- où les radicaux R, identiques ou différents représentent des radicaux monovalents hydrocarbonés ayant de 1 à 10 atomes de carbone, éventuellement substitués par des atomes d'halogènes ou des groupes cyano. De préférence les radicaux R sont choisis parmi les radicaux méthyle, phényle, vinyle et trifluoro-3,3,3 propyle,
- où n a une valeur suffisante pour conférer au polymère de formule (1) une viscosité de 25 à 1 000 000 mPa.s à 25 °C.

(B) - 5 à 250 parties d'une charge minérale choisie parmi les charges siliceuses et non siliceuses.

(C) - 0,01 à 5 parties en poids d'un composé métallique de durcissement.

ladite dispersion ayant une teneur en extrait sec d'au moins 40 %, ledit tensio-actif n'ayant aucune action catalytique de polymérisation et/ou de polycondensation du polydiorganosiloxane de formule (1).

Les huiles de formule (1) sont obtenues par réaction d'un ($\alpha$,$\omega$-dihydroxy)polydiorganosiloxane de formule :

$$HO - \left[ \begin{array}{c} R \\ | \\ SiO \\ | \\ R \end{array} \right]_n - H \qquad (2)$$

dans laquelle n et R ont la signification donnée ci-dessus, sur un polyalcoxysilane de formule :

$$(R^4)_c(R^1)_aSi(OR^2)_{4-(a+c)} \qquad (3)$$

dans laquelle $R^1$ , $R^2$ , $R^4$ , a et c ont la signification donnée ci-dessus, de préférence en présence d'une quantité catalytiquement efficace de catalyseur (D),

n a une valeur suffisante pour conférer aux polymères de formules (1) et (2) une viscosité de 25 à 1 000 000 mPa.s à 25 °C, étant entendu que le polymère de formule (1) peut avoir une formule moyenne dans laquelle la valeur de n est plus forte ou plus faible que la valeur de n du polymère de formule (2) réagissant sur le silane de formule (3).

Comme catalyseur (D) utilisable on peut en particulier citer :

- acétate de potassium : US-A-3 504 051,
- oxydes minéraux divers : FR-A-1 495 011,
- dérivés organiques du titane : US-A-4 111 890,
- titanate plus amine : US-A-3 647 846,
- chelate d'alcoxy aluminium : GB-A-2 144 758,
- hydroxylamine N-N' disubstituée : FR-A-2 508 467,
- acide carboxylique plus amine : FR-a-2 604 713,
- carbamates : EP-A-0 210 402,
- composés organiques ayant une fonction oxime : FR-A-2 597 875.

Les radicaux R mentionnés ci-avant comprennent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.
- les radicaux cyanoalkyles dont les chaînons alkyles ont de 2 à 3 atomes de carbone tels que les radicaux $\beta$-cyanoéthyle et -cyanopropyle.

A titre d'exemples concrets de motifs $R_2SiO$ présents dans l'alpha, oméga dihydroxydiorganopolysiloxane de formule (2) on peut citer :

$(CH_3)_2SiO$,
$CH_3(CH_2=CH)SiO$
$CH_3(C_6H_5)SiO$
$(C_6H_5)_2SiO$,
$CF_3CH_2CH_2(CH_3)SiO$
$NC-CH_2CH_2(CH_3)SiO$
$NC-CH(CH_3)CH_2(CH_2=CH)SiO$
$NC-CH_2CH_2CH_2(C_6H_5)SiO$

De préférence au moins 80 % des radicaux R sont méthyle.

Il doit être compris que pour préparer le polymère de formule (1), on peut utiliser comme polymère de formule (2) un mélange constitué de polymères $\alpha,\omega$-di(hydroxy)-diorganopolysiloxanes qui diffèrent entre eux par le poids moléculaire et/ou la nature des groupements liés aux atomes de silicium. Il doit être indiqué de plus

que le polymère de formule (2) peut éventuellement comprendre des motifs mono-organosiloxy $RSiO_{1,5}$ et/ou des motifs $SiO_2$, dans la proportion d'au plus 2 % par rapport au nombre de motifs diorganosiloxy $R_2SiO$.

Ces polymères α,ω-di(hydroxy)diorganopolysiloxanes sont commercialisés ; en outre, ils peuvent être aisément fabriqués selon des techniques maintenant bien connues.

Parmi les polyalcoxysilanes de formule $(R^4)_c(R^1)_aSi(OR^2)_{4-(a+c)}$ pouvant être utilisés on peut notamment citer ceux ci-après :

$Si(OCH_3)_4$
$Si(OCH_2CH_3)_4$
$Si(OCH_2CH_2CH_3)_4$
$(CH_3O)_3SiCH_3$
$(C_2H_5O)_3SiCH_3$
$(CH_3O)_3SiCH = CH_2$
$(C_2H_5O)_3SiCH = CH_2$
$(CH_3O)_3SiCH_2\text{-}CH = CH_2$
$(CH_3O)_3Si \{CH_2\text{-}(CH_3)C = CH_2\}$
$(C_2H_5O)_3Si(OCH_3)$
$Si(OCH_2\text{-}CH_2\text{-}OCH_3)_4$
$CH_3Si(OCH_2\text{-}CH_2\text{-}OCH_3)_3$
$CH_2 = CHSi(OCH_2CH_2OCH_3)_3$
$C_6H_5Si(OCH_3)_3$
$C_6H_5Si(OCH_2\text{-}CH_2\text{-}OCH_3)_3$

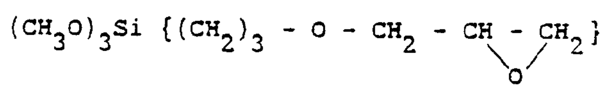

$(CH_3O)_3Si\{(CH_2)_2 - CH_2 Cl\}$
$(CH_3O)_3Si\{(CH_2)_3 - OOC - (CH_3) C = CH_2\}$

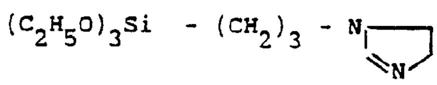

$(C_2H_5O)_3Si (CH_2)_2 - CH_2Cl$
$(CH_3O)_3Si (CH_2)_3 - NH_2$
$(C_2H_5O)_3Si (CH_2)_3 - NH_2$
$(CH_3O)_3Si (CH_2)_3 - NH - (CH_2)_2 - NH_2$
$(C_2H_5O)_3Si (CH_2)_3 - NH - (CH_2)_2 - NH_2$
$(CH_3O)_3\text{-}Si(CH_2)_3 - SH$
$(CH_3) (CH_2 = CH)Si(OCH_3)_2$

Les polyalcoxysilanes les plus couramment utilisés sont :

$Si(OC_2H_5)_4$ , $CH_3Si(OCH_3)_3$ , $CH_3Si(OC_2H_5)_3$ , $(C_2H_5O)_3Si(OCH_3)$ , $CH_2 = CH - Si(OCH_3)_3$ , $CH_3(CH_2{=}CH)Si(OCH_3)_2$ , $CH_2 = CH - Si(OC_2H_5)_3$.

On recommande dans le cadre de la présente invention d'utiliser comme catalyseur (D) la lithine de formule LiOH ou $LiOH,H_2O$, utilisée de préférence en solution dans un alcool, selon l'enseignement de la demande de brevet français 88/15 312, déposée le 4 novembre 1988 au nom de la Demanderesse.

Selon ce procédé de fonctionnalisation, pour une mole de groupement silanol (≡ SiOH) du polydiorganosiloxane de formule (2) comprenant un groupement hydroxy lié a un atome de silicium à chaque extrémités de chaîne, on utilise généralement de 1 à 60 moles de polyalcoxysilane de formule (3), l'excès de cet alcoxysilane (3) étant d'autant plus important que le poids moléculaire du polydiorganopolysiloxane de formule (2) est plus grand.

Par quantité catalytiquement efficace de lithine on entend une quantité telle que la vitesse de réaction est notablement améliorée et que la température de la réaction est la plus proche possible de la température ambiante, notamment en utilisant du $CH_3Si(OCH_3)_3$, du $CH_2 = CH - Si(OCH_3)_3$ ou du Me $ViSi(OCH_3)_3$ comme agent de fonctionnalisation. Généralement on utilise du 0,001 à 0,5 de lithine par rapport à 1 mole de groupement silanol ≡ SiOH du polydiorganosiloxane de formule (2), étant entendu que pour avoir 1 mole de ≡ SiOH il faut

0,5 mole du polydiorganosiloxane de formule (2).

Le procédé est mis en oeuvre à l'abri de l'humidité, par exemple dans un réacteur fermé muni d'une agitation dans lequel on a fait le vide, puis remplace l'air chassé par un gaz anhydre, par exemple par de l'azote.

On charge les réactifs et le catalyseur dans le réacteur et lorsque la réaction de fonctionnalisation est terminée on procède à la neutralisation du catalyseur et éventuellement à la dévolatilisation de la masse réactionnelle obtenue pour en éliminer l'alcool formé au cours de la réaction de fonctionnalisation et l'excès de l'agent de fonctionnalisation (c'est-à-dire le silane de formule 3).

Pour neutraliser le catalyseur de fonctionnalisation (la lithine) de nombreux produits peuvent être utilisés, par exemple du trichloroéthylphosphate ou du diméthylvinylsilylacétate. On préfère cependant utiliser un silylphosphate, tel que par exemple ceux décrits dans le brevet français FR-A-2 410 004.

La dévolatisation est effectuée par exemple sous une pression absolue comprise entre 0,133 et 13,3 KPa.

Pour préparer l'émulsion (A) divers procédés sont utilisables.

Selon un premier procédé, on mélange le polymère (1) avec l'agent tensio-actif, ce dernier pouvant être déjà en solution aqueuse, puis on ajoute ensuite, si nécessaire, de l'eau. On transforme ensuite l'ensemble en une émulsion fine et homogène par passage dans un broyeur classique à colloïdes. Ce premier procédé est mis en oeuvre par exemple dans les brevets FR-A-2 064 563, FR-A-2 094 322, FR-A-2 114 230 et EP-A-169 098.

Selon un deuxième procédé, on prémélange l'agent tensio-actif et au moins une partie de l'eau à une température comprise entre la température ambiante (20 °C) et 80 °C jusqu'à l'obtention d'un mélange homogène, puis on ajoute lentement l'organopolysiloxane au prémélange, tout en agitant énergiquement à une température comprise entre 20 et 80 °C. On règle la consistance de l'émulsion homogène obtenue en ajoutant éventuellement de l'eau. Ce deuxième procédé est par exemple décrit dans les brevets français FR-A-2 471 210 et FR-A-2 485 923.

Les agents tensio-actifs anioniques sont choisis parmi les alkylbenzènesulfonates de métaux alcalins, alkylsulfates de métaux alcalins, les alkyléthersulfates de métaux alcalins, les alkylaryléthersulfates de métaux alcalins et les dioctylsulfosuccinates de métaux alcalins.

Les agents tensio-actifs non ioniques sont choisis parmi les acides gras polyéthoxylés, les esters de sorbitan, les esters de sorbitan polyéthoxylés, les alkylphénols polyéthoxylés, les alcools gras polyéthoxylés, les amides gras polyéthoxylés ou polyglycérolés, les alcools et alphadiols polyglycérolés.

On peut bien entendu utiliser un mélange de tensio-actifs anioniques et non-ioniques.

L'émulsion présente de préférence une teneur en extraits secc d'au moins 40 % en poids.

Il est recommandé d'utiliser de 0,5 à 50 parties, de préférence de 1 à 20 parties de tensio-actif pour 100 parties de polymère (1).

Un tensio-actif plus préféré est le dodécylbenzène sulfonate de sodium.

La dispersion aqueuse selon l'invention comporte en outre de 5 à 250 parties, de préférence de 10 à 100 parties d'une charge minérale (B) choisie parmi les charges siliceuses et les charges non siliceuses.

Comme charge siliceuse on préconise les charges renforçantes ou semi-renforçantes choisies parmi la silice colloïdale, les poudres de silices de pyrogénation et de précipitation. On peut également utiliser des charges siliceuses naturelles telles que des terres de diatomées et du quartz broyé.

Comme charge non siliceuse, on préconise plus particulièrement du carbonate de calcium de précipitation dont le diamètre particulaire moyen est inférieur à 0,1 $\mu$m.

Comme charge non siliceuse, en plus du carbonate de calcium naturel broyé, on peut utiliser seul ou en mélange le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte.

Ces charges (B) sont introduites dans l'émulsion (A) sous forme de poudre sèche par exemple par simple mélange.

Selon une variante de l'invention, on a découvert que si la charge (B) n'est sensiblement constituée que d'une charge choisie parmi l'alumine hydratée, la vermiculite expansée, la vermiculite non expansée selon une teneur de 5 à 250, de préférence de 50 à 200 parties pour 100 parties d'émulsion (A) on obtient un élastomère ayant une résistance à la flamme particulièrement élevée qui ne peut pas être obtenue avec les autres catégories de charge (B) précitées, en particulier avec l'oxyde d'aluminium ou alumine non hydratée. On peut également incorporer des fibres céramiques ou d'aramide selon l'enseignement de EP-A-212 827.

Les composés catalytiques métalliques de durcissement (C) sont essentiellement les sels d'acides carboxyliques et les halogénures de métaux choisis parmi le plomb, le zinc, le zirconium, le titane, le fer, l'étain, le baryum, le calcium et le manganèse.

Le constituant (C) est de préférence un composé catalytique à l'étain, généralement un sel d'organoétain, introduit de préférence sous forme d'une émulsion aqueuse. Les sels d'organoétain utilisables sont décrits,

en particulier dans l'ouvrage de NOLL, Chemistry and Technology of Silicones Academic Press (1968), page 337.

On peut également utiliser comme composé catalytique à l'étain le produit de réaction d'un sel d'étain, en particulier d'un di-carboxylate d'étain sur du polysilicate d'éthyle, comme décrit dans le brevet US-A-3 862 919.

On peut également utiliser le produit de réaction d'un silicate d'alkyle ou d'un alkyltrialcoxysilane sur le diacétate de dibutylétain comme décrit dans le brevet belge BE-A-842 305.

Les sels d'étain préférés sont les bischelates d'étain (EP-A-147 323 et EP-A-235 049), les dicarboxylates de diorganoétain et en particulier les diversatates de dibutyl- ou de dioctylétain (brevet britannique GB-A-1 289 900), le diacétate de dibutyl- ou de dioctylétain, le dilaurate de dibutyl- ou de dioctylétain. On utilise de 0,01 à 3, de préférence de 0,05 à 2 parties de sel d'organoétain pour 100 parties de (A).

Selon une variante préférée les dispersions aqueuses selon l'invention comportent en outre pour 100 parties d'émulsion (A), de 10 à 180 parties d'une émulsion (D), d'un fluide polyorganosiloxane ($D_1$) ou organique ($D_2$), dans le but d'agir sur les caractéristiques physiques des dispersions finales et/ou sur les propriétés mécaniques des élastomères issues de ces dispersions.

Les émulsions (D) comportent de préférence au moins 40 % d'extraits secs.

Les fluides polyorganosiloxane ($D_1$) comprennent plus spécialement :

a) - des polymères $\alpha,\omega$-bis(triorganosiloxy)diorganopolysiloxanes et/ou $\alpha$-(hydroxy),$\omega$-(triorganosiloxy)diorganopolysiloxanes, de viscosités d'au moins 10 mPa.s à 25 °C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle, phényle, 60 % au moins de ces radicaux organiques étant des radicaux méthyle et 10 % au plus étant des radicaux vinyle.

On utilise de préférence les huiles $\alpha,\omega$-bis(triméthylsiloxy)diméthylpolysiloxanes de viscosité allant de 10 mPa.s à 1 000 mPa.s à 25 °C. Ces polymères qui jouent le rôle de plastifiants peuvent être introduits à raison d'au plus 150 parties, de préférence de 5 à 120 parties, pour 100 parties des polymères de formule (1).

b) - des polymères méthylpolysiloxanes ramifiés, liquides, ayant de 1,4 à 1,9 radical méthyle par atome de silicium constitués d'une combinaison de motifs de formules :

$(CH_3)_3SiO_{0,5}$
$(CH_3)_2SiO$ et
$CH_3SiO_{1,5}$

renfermant de 0,1 à 8 % de groupes hydroxyles.

Ils peuvent être obtenus par hydrolyse des chlorosilanes correspondants comme l'enseignent les brevets français FR-A-1 408 662 et FR-A-2 429 811. On utilise, de préférence, des polymères ramifiés dont les motifs sont répartis, selon les rapports suivants :

$(CH_3)_3SiO_{0,5}/(CH_3)_2SiO = 0,01$ à 0,15
et $CH_3SiO_{1,5}/(CH_3)_2SiO = 0,1$ à 1,5.

Ces polymères peuvent être introduits à raison d'au plus 70 parties, de préférence de 3 à 50 parties, pour 100 parties de polymères de formule (1). Ils apportent les propriétés de thixotropie notamment avec les silices traitées.

c) - des huiles diorganopolysiloxanes bloquées par des groupes hydroxyle et/ou alcoxy inférieurs ayant de 1 à 4 atomes de carbone, de viscosité comprise dans l'intervalle de 2 mPa.s à 40 000 mPa.s à 25 °C. Les radicaux organiques liés aux atomes de silicium de ces huiles étant choisis parmi les radicaux méthyle et 10 % au plus étant des radicaux vinyle.

Comme groupes alcoxy inférieurs bloqueurs de chaîne peuvent être cités les groupes méthoxy, éthoxy, isopropoxy, n-propoxy, n-butoxy, isobutoxy, tertiobutoxy. Les taux en groupes hydroxyl et/ou alcoxy varient généralement entre 0,5 et 20 % . Ces huiles sont préparées selon des techniques usuelles décrites plus précisément dans les brevets français FR-A-938 292, FR-A-1 104 674, FR-A-1 116 196, FR-A-1 278 281, FR-A-1 276 619. De préférence, on utilise des huiles $\alpha,\omega$-dihydroxyméthylphénylpolysiloxanes de viscosité 200 à 600 mPa.s à 25 °C, et des huiles $\alpha,\omega$-diméthoxy (ou diéthoxy)diméthylpolysiloxanes de viscosité 30 à 2 000 mPa.s à 25 °C. Elles peuvent être introduites à raison d'au plus 50 parties, de préférence de 2 à 40 parties, pour 100 parties des polymères de formule (1).

Ces huiles permettent d'allonger la chaîne des polymères de formule (1).

Les huiles c) répondent à la même formule (1), sauf que a + c est égal à 2, $R_2$ peut être H et n est généralement compris entre 0 et 30.

Les polymères a), b) et c) peuvent être remplacés, totalement ou partiellement, par des composés organiques (d) inertes vis-à-vis des constituants (A), (B), (C) ou (D) de la dispersion aqueuse. Comme exemples de ces composés organiques peuvent être mentionnés les polyalkylbenzènes obtenus par alkylation du benzène à partir d'oléfines à longue chaîne, en particulier des oléfines à 12 atomes de carbone issues de la polymérisation du propylène. Des composés organiques de ce type figurent par exemple dans les brevets FR-A-2 392 476 et FR-A-2 446 849.

Les émulsions (D) peuvent être préparées avec les mêmes procédés et les mêmes tensio-actifs que ceux utilisés pour l'émulsion (A).

Toutefois les fluides a), b), c) et d) peuvent être mis en émulsion aqueuse simultanément avec le polymère (1) au sein de l'émulsion (A).

L'émulsion aqueuse (A) peut comporter en outre, pour 100 parties en poids de diorganopolysiloxane de formule (1), de 0,1 à 20 parties en poids de silane de formule :

$$(R^4)_c\,(R^1)_a\,Si(OR^2)_{4-(a+c)} \qquad (3)$$

dans laquelle $R^1$, $R^2$, $R^4$, a et c ont la signification donnée ci-dessus.

Ce silane (3) est présent ou est ajouté au polymère (1) avant sa mise en émulsion aqueuse. Ce silane (3) peut donc être identique ou différent du silane utilisé pour fonctionnaliser le polymère de formule (2). Ce silane (3) permet de diminuer la viscosité du polymère (3), ce qui facilite sa mise en émulsion.

Par ailleurs le silane (3) permet de moduler les propriétés physicochimiques de l'élastomère issu de la dispersion aqueuse, en particulier l'adhérence.

Pour préparer les dispersions aqueuses selon l'invention il est recommandé de préparer tout d'abord l'émulsion (A) comportant le polymère (1) et, éventuellement, le silane (3) et les fluides a), b), c) et d), ces fluides a), b), c) et d) pouvant être mis en émulsion (D), on ajoute ensuite le composé métallique de durcissement (C), de préférence sous forme d'une émulsion aqueuse, puis la charge (B).

La dispersion finale obtenue est homogénéisée puis dégazée et est ensuite conditionnée en emballage étanche à l'oxygène de l'air et à la vapeur d'eau.

Les constituants (A), (B), (C), et éventuellement (D) sont mélangés en des quantités telles que la dispersion finale présente une teneur en extraits secs supérieure à 40 %, de préférence supérieure à 60 %, mais généralement inférieure à 90 %. La zone de pH préférée peut être comprise entre 4 et 13 selon la nature des tensioactifs et des charges.

Les dispersions selon l'invention peuvent être utilisées comme peinture réticulable en couche mince. Elles présentent alors, de préférence, un extrait sec compris entre 40 et 70 %.

Pour déterminer la teneur en extraits secs on place 2 g de dispersion dans une coupelle de pesage en aluminium et on la chauffe 1 heure à 150 °C dans un four à circulation d'air. Après refroidissement on pèse à nouveau la coupelle et on détermine le pourcentage de matière restante sur les 2 g initiaux qui représente la teneur en extraits secs.

Selon une variante préférée, la dispersion selon l'invention après sa préparation subit une étape de maturation, à température ambiante, de quelques heures à quelques jours.

Cette étape de maturation consiste simplement à laisser reposer la dispersion à l'abri de l'oxygène de l'air avant son utilisation.

Les dispersions selon l'invention peuvent être utilisées pour la réalisation de joints élastomères silicone, en particulier pour le bâtiment.

Ces dispersions sont également utilisables pour l'enrobage de divers principes actifs pharmaceutiques ou phytosanitaires formulés sous une forme solide (pastilles, tablettes, pillules, etc .....), pour l'enduction de bouchons de liège utilisés pour obturer les bouteilles de vins et de spiritueux, pour réaliser des revêtements d'objets culinaires et, de façon générale, d'objets en contact avec des aliments (par exemple des moules à pains).

Les techniques connues d'enrobage sont utilisables en particulier les techniques d'enduction au pinceau et au trempé (par immersion), les techniques de pulvérisation, les techniques d'enrobage en lit fluidisé et les techniques d'enduction par immersion.

Pour les revêtements de bouchons de liège, une technique recommandée est la technique du trempé qui consiste à immerger les bouchons dans la dispersion qui mouille la surface du bouchon, puis à évaporer l'eau.

Le revêtement obtenu représente 20 à 50 mg d'élastomère pour 100 $cm^2$ de surface de bouchon. Cette couche facilite le glissement du bouchon dans le goulot de la bouteille lors de l'embouteillage et évite le "coulage", c'est-à-dire des fuites de liquide entre le goulot et le bouchon.

Dans ce qui suit ou ce qui précède, sauf mentions contraires, les pourcentages et parties sont en poids.

Les exemples ci-après illustrent l'invention sans en limiter la portée.

- EXEMPLE 1 :

1.a. - Préparation de l'huile silicone fonctionnalisée :

On introduit dans un réacteur 100 g d'une huile polydiméthylsiloxane $\alpha,\omega$-dihydroxylée de viscosité 70 000 mPa.s à 25 °C, 1 g de vinyltriméthoxysilane et 0,046 g d'une solution à 10 % en poids de lithine ($LiOH, H_2O$) dans le méthanol ; après 5 minutes d'agitation à température ambiante et sous atmosphère anhydre, le mélange réactionnel est neutralisé par 0,085 g du résidu réactionnel de phosphate de silyle présentant une teneur équivalente en acide phosphorique de 12,5 % et préparé selon le mode opératoire de l'exemple 2 du brevet français FR-A-2 410 004.

1.b. - Mise en émulsion :

On introduit 500 parties d'huile fonctionnalisée de l'exemple 1.a., 80 parties de dodécylbenzène sulfonate de sodium MARANIL®A55 et 420 parties d'eau distillée dans un broyeur à colloïdes MORITZ® et l'on obtient une émulsion (A) présentant un extrait sec de 55,4 % et un diamètre de micelles de 1,28 µm.

1.c. - Préparation des dispersions aqueuses :

Dans un malaxeur à bras de type MEILI®, on introduit dans l'ordre : 200 parties d'émulsion (A), 0,78 partie d'émulsion aqueuse (C) à 37 % en poids de dilaurate de di n-octylétain et 130 parties en poids de carbonate de calcium de précipitation, de granulométrie moyenne 0,07 µm en respectant à chaque fois une durée d'incorporation d'environ 15 minutes.

La dispersion finale obtenue est dégazée pendant 30 minutes sous un vide de 1,33 KPa.

Le pH de la dispersion est de 7,5 et sa teneur en extrait sec est de 73 %.

La dispersion est conditionnée en emballage (cartouche) étanche à l'oxygène de l'air et à la vapeur d'eau.

Après 7 jours de stockage, on étend à la râcle la dispersion suivant une pellicule (film) de 2 mm d'épaisseur qu'on laisse sécher à l'air ambiant pendant 10 jours à température ambiante 20 °C.

Sur les pellicules séchées on mesure les propriétés mécaniques moyennes suivantes :

- la dureté Shore A (DSA) selon la norme ASTM-D-2240,
- la résistance à la rupture (R/R) selon la norme AFNOR-T 46 002 correspondant à la norme ASTM-D 412, en MPa,
- l'allongement à la rupture (A/R) en % selon la norme AFNOR-T 46 002,
- le module élastique (ME) à 100 % d'allongement selon la norme AFNOR-T 46 002, en MPa.

Les propriétés mécaniques obtenues sont rassemblées dans le tableau ci-après.

- EXEMPLES 2 ET 3 :

On répète exactement le mode opératoire de l'exemple 1 sauf que :

- pour l'exemple 2 on utilise une huile polydiméthylsiloxane α,ω-dihydroxylée de viscosité 20 000 mPa.s à 25 °C et on ajoute à l'émulsion (A) 100 parties de carbonate de calcium.
- pour l'exemple 3, 20 % en poids de l'huile fonctionnalisée sont remplacés par une huile polydiméthylsiloxane bloquée à chacune de ses extrémités par un groupe triméthylsilyle, de viscosité 100 mPa.s à 25 °C et on ajoute à l'émulsion (A) 140 parties de carbonate de calcium.

Les résultats obtenus sont rassemblés dans le tableau ci-après.

TABLEAU

| EXEMPLES | 1 | 2 | 3 |
|---|---|---|---|
| DSA | 22 | 16 | 14 |
| R/R (MPa) | 1,40 | 1,44 | 1,01 |
| A/R % | 700 | 655 | 500 |
| ME (MPa) | 0,33 | 0,29 | 0,25 |

## Revendications

1. Dispersion aqueuse de silicone, réticulant en un élastomère par élimination de l'eau dans les conditions ambiantes, caractérisée en ce qu'elle comporte :
   (A) - 100 parties en poids d'une émulsion du type huile dans eau stabilisée par au moins un agent tensio-actif choisi parmi les agents tensio-actifs anioniques et non-ioniques et leurs mélanges, d'au moins un diorganopolysiloxane de formule :

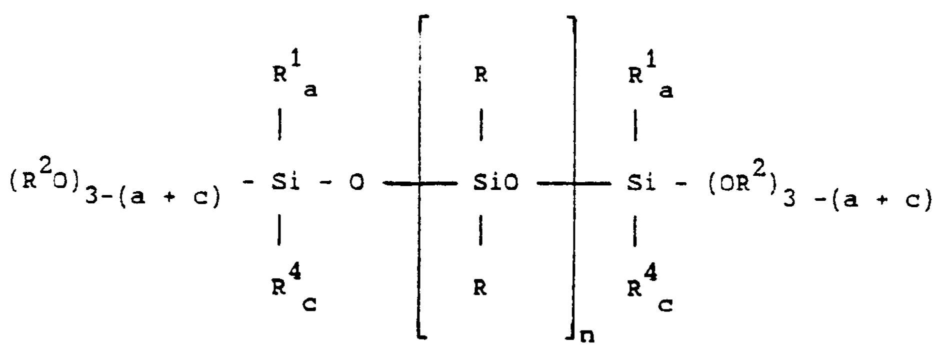
(1)

   - où a est 0 ou 1,
   - où c est 0 ou 1,
   - où a + c = 0 ou 1,
   - où $R^1$ représente un radical monovalent hydrocarboné saturé ou non en $C_1$ à $C_{13}$, substitué ou non substitué, aliphatique, cyclique ou aromatique, pouvant comporter une fonction époxy ou une fonction amine primaire, secondaire ou tertiaire,
   - où $R^2$ identique ou différent représente un radical organique aliphatique ayant de 1 à 8 atomes de carbone choisi notamment entre les radicaux alkyle, les radicaux alkyléther, les radicaux alkylester, les radicaux alkylcétone, les radicaux alkylcyano et les radicaux aralkyle ayant de 7 à 13 atomes de carbone,

- où $R^4$ représente un radical monovalent hydrocarboné saturé ou non en $C_1$ à $C_{13}$ substitué ou non, aliphatique, cyclique ou aromatique, $R^4$ pouvant être identique à $R^1$,
- ou les radicaux R, identiques ou différents représentent des radicaux monovalents hydrocarbonés ayant de 1 à 10 atomes de carbone, éventuellement substitués par des atomes d'halogènes ou des groupes cyano. De préférence les radicaux R sont choisis parmi les radicaux méthyle, phényle, vinyle et trifluoro-3,3,3 propyle,
- où n a une valeur suffisante pour conférer au polymère de formule (1) une viscosité de 25 à 1 000 000 mPa.s à 25 °C.

(B) - 5 à 250 parties d'une charge minérale choisie parmi les charges siliceuses et non siliceuses.

(C) - 0,01 à 5 parties en poids d'un composé métallique de durcissement.

ladite dispersion ayant une teneur en extrait sec d'au moins 40 %, ledit tensio-actif n'ayant aucune action catalytique de polymérisation et/ou de polycondensation du polydiorganosiloxane de formule (1).

2. Dispersion aqueuse selon la revendication 1, caractérisée en ce que le diorganopolysiloxane de formule (1) est obtenu par réaction d'un (α,ω-dihydroxy)polydiorganosiloxane de formule :

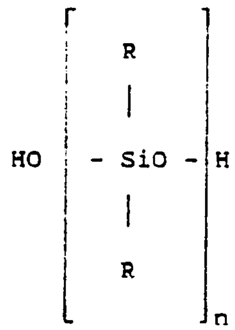

(2)

dans laquelle n et R ont la signification donnée ci-dessus sur un polyalcoxysilane de formule :

$$(R^4)_c\,(R^1)_a\,Si(OR^2)_{4-(a+c)} \qquad (3)$$

dans laquelle $R^1$, $R^2$, $R^4$ a et c ont la signification ci-dessus en présence d'une quantité catalytiquement efficace de lithine.

3. Dispersion aqueuse selon la revendication 1 ou 2, caractérisée en ce que le tensio-actif est le dodécylbenzène sulfonate de sodium.

4. Dispersion aqueuse selon l'une quelconque des revendications précédentes, caractérisée en ce que l'émulsion (A) a une teneur en extrait sec d'au moins 40 % en poids.

5. Dispersion aqueuse selon l'une quelconque des revendications précédentes, caractérisée en ce que la charge (B) est choisie parmi la silice colloïdale, les silices de pyrogénation, les silices de précipitation, les terres de diatomées, le quartz broyé, le carbonate de calcium, le noir de carbone, le dioxyde de titane, l'oxyde d'aluminium, l'alumine hydratée, la vermiculite expansée, la vermiculite non expansée, l'oxyde de zinc, le mica, le talc, l'oxyde de fer, le sulfate de baryum et la chaux éteinte et leurs divers mélanges possibles.

6. Dispersion aqueuse sels l'une quelconque des revendications précédentes, caractérisée en ce que la charge (B) est du carbonate de calcium de précipitation dont le diamètre particulaire moyen est inférieur à 0,1 µm.

7. Dispersion aqueuse selon l'une quelconque des revendications précédentes, caractérisée en ce que le composé métallique (D) est un sel d'organoétain se trouvant sous forme d'une émulsion aqueuses.

8. Dispersion aqueuse selon l'une quelconque des revendications précédentes, caractérisée en ce qu'elle comporte en outre de 10 à 180 parties d'une émulsion (D) d'un fluide polyorganosiloxane ($D_1$) choisi parmi :

a) - des polymères α,ω-bis(triorganosiloxy)diorganopolysiloxanes et/ou α-(hydroxy),ω-(triorganosiloxy)diorganopolysiloxanes, de viscosités d'au moins 10 mPa.s à 25 °C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle, phényle, 60 % au moins de ces radicaux organiques étant des radicaux méthyle et 10 % au plus étant des radicaux vinyle.
b) - des polymères méthylpolysiloxanes ramifiés, liquides, ayant de 1,4 à 1,9 radical méthyle par atome de silicium constitués d'une combinaison de motifs de formules :

$(CH_3)_3SiO_{0,5}$
$(CH_3)_2SiO$ et
$CH_3SiO_{1,5}$

renfermant de 0,1 à 8 % de groupes hydroxyles.
c) - des huiles diorganopolysiloxanes bloquées par des groupes hydroxyle et/ou alcoxy inférieurs ayant de 1 à 4 atomes de carbone, de viscosité comprise dans l'intervalle de 2 mPa.s à 40 000 mPa.s à 25 °C. Les radicaux organiques liés aux atomes de silicium de ces huiles étant choisis parmi les radicaux méthyle et 10 % au plus étant des radicaux vinyle.

9. Dispersion aqueuse selon la revendication 7, caractérisée en ce que tout ou partie des fluides ($D_1$) est remplacé par des polyalkylbenzènes.

10. Dispersion aqueuse selon l'une quelconque des revendications précédentes, caractérisée en ce que l'émulsion (A) comporte en outre pour 100 parties en poids de diorganopolysiloxane de formule (1), de 0,1 à 20 parties en poids de silane de formule :

$$(R^4)_c\,(R^1)_a\,Si(OR^2)_{4-(a+c)} \qquad (3)$$

dans laquelle $R^1$, $R^2$, $R^4$, a et c ont la signification donnée ci-dessus.

11. Utilisation d'une dispersion aqueuse telle que définie à l'une quelconque des revendications 1 à 10 pour l'enduction et l'enrobage de principes actifs pharmaceutiques ou photosanitaires et pour la réalisation de revêtements d'objets en contact avec des aliments.

12. Utilisation selon la revendication 11, caractérisée en ce que lesdits objets en contact avec des aliments sont des bouchons de liège pour le conditionnement de vins et spiritueux.

## Patentansprüche

1. Wäßrige Silikondispersion, die zu einem Elastomeren vernetzt durch Enfernung des Wassers unter Umgebungsbedingungen dadurch gekennzeichnet, daß sie enthält:
(A) - 100 Gewichtsteile einer Emulsion vom Typ Öl in Wasser, die durch mindestens ein oberflächenaktives Mittel stabilisiert ist, ausgewählt unter den anionischen und nicht-ionischen oberflächenaktiven Mitteln und deren Gemischen,von wenigstens einem Diorganopolysiloxan der Formel

$$(R^2O)_{3-(a+c)}-\underset{\underset{R^4_c}{|}}{\overset{\overset{R^1_a}{|}}{Si}}-O\left[\underset{\underset{R}{|}}{\overset{\overset{R}{|}}{SiO}}\right]_n\underset{\underset{R^4_c}{|}}{\overset{\overset{R^1_a}{|}}{Si}}-(OR^2)_{3-(a+c)} \qquad (1)$$

- worin a 0 oder 1 ist,
- worin c 0 oder 1 ist,
- worin a+c = 0 oder 1,
- worin $R^1$ einen gesättigten oder nicht gesättigten einwertigen $C_1$-$C_{13}$-Kohlenwasserstoffrest be-

deutet, der substituiert oder nicht substituiert, aliphatisch, cyclisch oder aromatisch ist, und der eine Epoxyfunktion oder eine primäre, sekundäre oder tertiäre Aminofunktion tragen kann,

- worin $R^2$, identisch oder verschieden, einen aliphatischen organischen Rest mit 1 bis 8 Kohlenstoffatomen darstellt, ausgewählt insbesondere aus den Alkyl-, Alkylether-, Alkylester-, Alkylketon-, Alkylcyano- und Aralkylresten mit 7 bis 13 Kohlenstoffatomen,
- worin $R^4$ einen gesättigten oder nicht gesättigten einwertigen $C_1$-$C_{13}$-Kohlenwasserstoffrest darstellt, der substituiert oder nicht substituiert, aliphatisch, cyclisch oder aromatisch ist, wobei $R^4$ mit $R^1$ identisch sein kann,
- worin die Reste R, die identisch oder verschieden sind, einwertige Kohlenwasserstoffreste mit 1 bis 10 Kohlenstoffatomen bedeuten, die gegebenenfalls durch Halogenatome oder Cyanogruppen substituiert sind, wobei die Reste R vorzugsweise ausgewählt sind unter den Methyl-, Phenyl-, Vinyl- und 3,3,3-Trifluorpropylresten,
- worin n einen ausreichenden Wert hat, um dem Polymeren der Formel (1) eine Viskosität von 25 bis 1 000 000 mPa.s bei 25°C zu verleihen;

(B) - 5 bis 250 Teile eines mineralischen Füllstoffes, ausgewählt unter den siliciumhaltigen und nicht siliciumhaltigen Füllstoffen;

(C) - 0,01 bis 5 Gewichtsteile einer Härtungsmetallverbindung, wobei diese Dispersion einen Gehalt an Trockenextrakt von mindestens 40 % hat, dieses oberflächenaktive Mittel keinerlei katalytische Polymerisations- und/oder Polykondensationswirkung des Polydiorganosiloxans der Formel (1) hat.

2. Wäßrige Dispersion gemäß Anspruch 1, dadurch gekennzeichnet, daß das Diorganopolysiloxan der Formel (1) erhalten wird durch Reaktion eines ($\alpha,\omega$-Dihydroxy)-polydiorganosiloxans der Formel

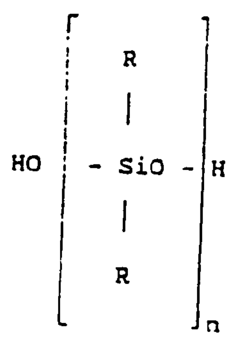

(2)

worin n und R die vorstehend angegebene Bedeutung haben, mit einem Polyalkoxysilan der Formel

$$(R^4)_c\,(R^1)_a\,Si(OR^2)_{4-(a+c)} \qquad (3)$$

worin $R^1$, $R^2$, $R^4$, a und c die vorstehend angegebene Bedeutung haben, in Gegenwart einer katalytisch wirksamen Lithiumhydroxidmenge.

3. Wäßrige Dispersion gemäß Anspruch 1 oder 2, dadurch gekennzeichnet, daß das oberflächenaktive Mittel Natriumdodecylbenzolsulfonat ist.

4. Wäßrige Dispersion gemäß einem der vorhergehenden Ansprüche, dadurch gekennzeichnet, daß die Emulsion A einen Gehalt an Trockenextrakt von mindestens 40 Gew.-% hat.

5. Wäßrige Dispersion gemäß einem der vorhergehenden Ansprüche, dadurch gekennzeichnet, daß der Füllstoff (B) ausgewählt ist unter kolloidalem Siliciumdioxid, den pyrogen erhaltenen Siliciumdioxiden, den Fällungssiliciumdioxiden, Diatomeen-erden, gemahlenem Quarz, Kalciumcarbonat, Ruß, Titandioxid, Aluminiumoxid, Aluminiumoxidhydrat, expandiertem Vermiculit, nicht expandiertem Vermiculit, Zinkoxid, Glimmer, Talk, Eisenoxid, Bariumsulfat und gelöschtem Kalk, sowie deren mögliche verschiedene Mischungen.

6. Wäßrige Dispersion gemäß einem der vorhergehenden Ansprüche, dadurch gekennzeichnet, daß der Füllstoff (B) Fällungskalciumcarbonat ist, dessen mittlerer Teilchendurchmesser unter 0,1 µm ist.

7. Wäßrige Dispersion gemäß einem der vorhergehenden Ansprüche, dadurch gekennzeichnet, daß die Metallverbindung (D) ein Organozinnsalz ist, das in Form einer wäßrigen Emulsion vorliegt.

8. Wäßrige Dispersion gemäß einem der vorhergehenden Ansprüche, dadurch gekennzeichnet, daß sie außerdem 10 bis 180 Teile einer Emulsion (D) eines flüssigen Polyorganosiloxans ($D_1$) enthält, ausgewählt aus:

a) α,ω-Bis-(triorganosiloxy)-diorganopolysiloxan-polymeren und/oder α-(Hydroxy)-ω-(triorganosiloxy)-diorganopolysiloxanpolymeren der Viskosität von mindestens 10 mPa.s bei 25°C gebildet im wesentlichen aus Diorgansiloxy- und höchstens 1 % Monoorganosiloxy- und/oder Siloxy-Einheiten, wobei die an die Siliciumatome gebundenen organischen Reste ausgewählt sind aus den Methyl-, Vinyl-, Phenylresten, wobei mindestens 60 % dieser organischen Reste Methylreste und höchstens 10 % Vinylreste sind;

b) verzweigten, flüssigen, polymeren Methylpolysiloxanen mit 1,4 bis 1,9 Methylresten je Siliciumatom, bestehend aus einer Kombination von Einheiten der Formeln

$(CH_3)_3SiO_{0,5}$
$(CH_3)_2SiO$ und
$CH_3SiO_{1,5}$

enthaltend 0,1 bis 8 % Hydroxylgruppen;

c) Diorganopolysiloxanölen,blockiert durch Hydroxyl- und/oder niedrige Alkoxygruppen mit 1 bis 4 Kohlenstoffatomen, der Viskosität in dem Bereich von 2 mPa.s bis 40 000 mPa.s bei 25°C, wobei die an die Siliciumatome dieser Öle gebundenen organischen Reste ausgewählt sind aus den Methylresten und höchstens 10 % Vinylreste sind.

9. Wäßrige Dispersion gemäß Anspruch 7, dadurch gekennzeichnet daß die gesamten oder ein Teil der flüssigen ($D_1$) ersetzt ist durch Polyalkylbenzole.

10. Wäßrige Dispersion gemäß einem der vorhergehenden Ansprüche, dadurch gekennzeichnet, daß die Emulsion (A) außerdem pro 100 Gewichtsteile Diorganopolysiloxan der Formel (1) 0,1 bis 20 Gewichtsteile Silan der Formel

$$(R^4)_c\,(R^1)_a\,Si(OR^2)_{4-(a+c)} \qquad (3)$$

worin $R^1$, $R^2$, $R^4$, a und c die vorstehend angegebene Bedeutung haben, enthält.

11. Verwendung einer wäßrigen Dispersion, wie sie in einem der Ansprüche 1 bis 10 definiert ist, zum Überziehen und Umhüllen von pharmazeutischen oder Pflanzenschutzwirkstoffen und zur Herstellung von Überzügen von Gegenständen, die in Kontakt mit Lebensmitteln sind.

12. Verwendung gemäß Anspruch 11, dadurch gekennzeichnet, daß diese Gegenstände in Kontakt mit Lebensmitteln Korkstopfen zum Verpacken von Weinen und Spirituosen sind.

## Claims

1. Aqueous dispersion of a silicone crosslinking to an elastomer by removal of water in ambient conditions, characterised in that it comprises:

(A) - 100 parts by weight of an emulsion of the oil-in-water type, stabilised by at least one surface-active agent chosen from anionic and nonionic surface-active agents and their mixtures, of at least one diorganopolysiloxane of formula:

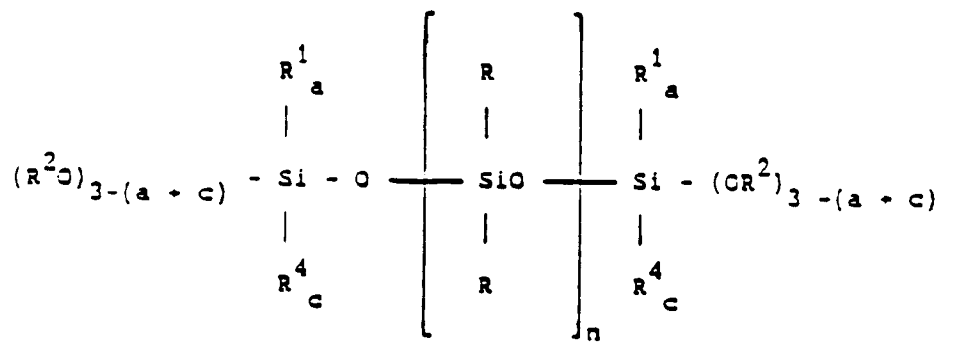

(1)

- where a is 0 or 1,
- where c is 0 or 1,
- where a + c = 0 or 1,
- where $R^1$ denotes an aliphatic, cyclic or aromatic, substituted or unsubstituted, $C_1$-$C_{13}$ saturated or unsaturated monovalent hydrocarbon radical which may contain an epoxy functional group or a primary, secondary or tertiary amine functional group,
- where $R^2$, which is identical or different, denotes an aliphatic organic radical containing from 1 to 8 carbon atoms, chosen especially from alkyl radicals, alkyl ether radicals, alkyl eater radicals, alkyl ketone radicals, alkylcyano radicals and aralkyl radicals containing from 7 to 13 carbon atoms,
- where $R^4$ denotes an aliphatic, cyclic or aromatic, substituted or unsubstituted, $C_1$-$C_{13}$ saturated or unsaturated monovalent hydrocarbon radical, it being possible for $R^4$ to be identical with $R^1$,
- where the radicals R, which are identical or different, denote monovalent hydrocarbon radicals containing from 1 to 10 carbon atoms, optionally substituted by halogen atoms or cyano groups. The radicals R are preferably chosen from methyl, phenyl, vinyl and 3,3,3-trifluoropropyl radicals,
- where n has a sufficient value to give the polymer of formula (1) a viscosity of 25 to 1,000,000 mPa s at 25°C;

(B) - 5 to 250 parts of an inorganic filler chosen from siliceous and nonsiliceous fillers;

(C) - 0.01 to 5 parts by weight of a metal curing compound;

the said dispersion having a solids content of at least 40 %, the said surfactant having no action catalysing the polymerisation and/or polycondensation of the polydiorganosiloxane of formula (1).

**2.** Aqueous dispersion according to Claim 1, characterised in that the diorganopolysiloxane of formula (1) is obtained by reaction of an $\alpha,\omega$-di(hydroxy)polydiorganosiloxane of formula:

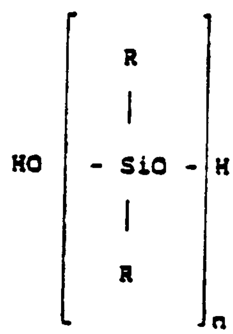

(2)

in which n ad R have the meaning given above, with a polyalkoxysilane of formula:

$$(R^4)_c(R^1)_aSi(OR^2)_{4-(a+c)} \quad (3)$$

in which $R^1$, $R^2$, $R^4$, a and c have the meaning above, in the presence of a catalytically effective quantity of lithium hydroxide.

**3.** Aqueous dispersion according to Claim 1 or 2, characterised in that the surfactant is sodium dodecylbenzenesulphonate.

**4.** Aqueous dispersion according to any one of the preceding claims, characterised in that the emulsion (A) has a solids content of at least 40 % by weight.

**5.** Aqueous dispersion according to any one of the preceding claims, characterised in that the filler (B) is chosen from colloidal silica, pyrogenic silicas, precipitated silicas, diatomaceous earths, ground quartz, calcium carbonate, carbon black, titanium dioxide, aluminium oxide, hydrated alumina, expanded vermiculite, unexpanded vermiculite, zinc oxide, mica, talc, iron oxide, barium sulphate and slaked lime and various possible mixtures thereof.

**6.** Aqueous dispersion according to any one of the preceding claims, characterised in that the filler (B) is precipitated calcium carbonate whose mean particle diameter is less than 0.1 μm.

**7.** Aqueous dispersion according to any one of the preceding claims, characterised in that the metal compound (D) is an organotin salt which is in the form of an aqueous emulsion.

**8.** Aqueous dispersion according to any one of the preceding claims, characterised in that it additionally contains from 10 to 180 parts of an emulsion (D) of a polyorganosiloxane fluid ($D_1$) chosen from:
a) $\alpha,\omega$-bis(triorganosiloxy)diorganopolysiloxane and/or $\alpha$-(hydroxy),$\omega$-(triorganosiloxy)diorganopolysiloxane polymers with viscosities of at least 10 mPa s at 25°C, which are made up essentially of diorganosiloxy units and not more than 1 % of monoorganosiloxy and/or siloxy units, the organic radicals bonded to the silicon atoms being chosen from methyl, vinyl and phenyl radicals, at least 60 % of these organic radicals being methyl radicals and not more than 10 % being vinyl radicals;
b) - liquid, branched methylpolysiloxane polymers containing from 1.4 to 1.9 methyl radicals per silicon atom, consisting of a combination of units of formulae:
$(CH_3)_3SiO_{0.5}$
$(CH_3)_2SiO$ and
$CH_3SiO_{1.5}$
containing from 0.1 to 8 % of hydroxyl groups;
c) - diorganopolysiloxane oils blocked by hydroxyl groups and/or lower alkoxy groups-containing from 1 to 4 carbon atoms, with a viscosity in the range from 2 mPa s to 40,000 mPa s at 25°C. The organic radicals bonded to the silicon atoms of these oils are chosen from methyl radicals and not more than 10 % are vinyl radicals.

**9.** Aqueous dispersion according to Claim 7, characterised in that all or part of the fluids ($D_1$) is replaced by polyalkylbenzenes.

**10.** Aqueous dispersion according to any one of the preceding claims, characterised in that the emulsion (A) additionally contains, per 100 parts by weight of diorganopolysiloxane of formula (1), from 0.1 to 20 parts by weight of silane of formula:

$$(R^4)_c(R^1)_aSi(OR^2)_{4-(a+c)} \qquad (3)$$

in which $R^1$, $R^2$, $R^3$, a and c have the meaning given above.

**11.** Use of an aqueous dispersion such as defined in any one of Claims 1 to 10 for covering and coating pharmaceutical or plant-protection active substances and for the production of coatings of articles in contact with foodstuffs.

**12.** Use according to Claim 11, characterised in that the said articles in contact with foodstuffs are cork stoppers for packaging wines and spirits.